# EUROPEAN PATENT SPECIFICATION

(11) **EP 1 788 470 B1**
(45) Date of publication and mention of the grant of the patent: **02.11.2011**
(21) Application number: 06124341.6
(22) Date of filing: 17.11.2006
(51) Int. Cl.: G05D 16/00, G05D 16/06, F02M 37/00

(54) **Pressure regulator apparatus**
Druckregelungsvorrichtung
Appareil régulateur de pression

(30) Priority: 18.11.2005 JP 2005333569
(43) Date of publication of application: 23.05.2007
(73) Proprietor: Keihin Corporation, Shinjuku-ku, Tokyo (JP)
(72) Inventor: Maeshima, Takayuki, c/o Keihin Corporation, Kawasaki-shi Kanagawa (JP); Akimoto, Motoki, c/o Keihin Corporation, Kawasaki-shi Kanagawa (JP)
(74) Representative: Viering, Jentschura & Partner

(56) References cited:
- EP-A2- 0 939 218
- EP-A2- 1 388 664
- WO-A1-02/48543
- DE-A1- 10 012 533
- JP-A- 10 047 185
- US-A- 4 446 837
- US-A1- 2001 023 687

## Description

### Technical Field

The present invention relates to a fuel injection apparatus of an internal combustion engine in which fuel within a fuel tank is boosted by a fuel pump, the boosted fuel is supplied to a fuel distribution pipe, the boosted fuel within the fuel distribution pipe is injected and supplied toward the engine via a fuel injection valve controlled by an ECU, and more particularly to a pressure regulator regulating the boosted fuel by the fuel pump to a predetermined constant fuel pressure.

### Background Art

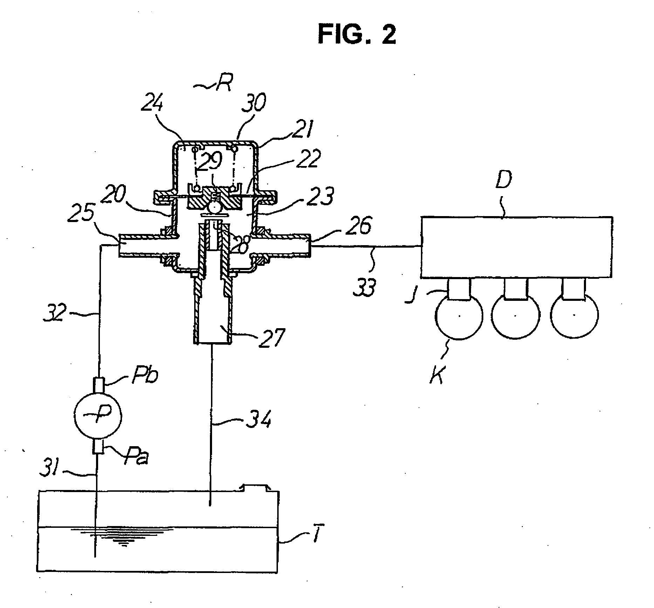

A pressure regulator used in a conventional fuel injection apparatus is shown in Fig. 2.

A pressure regulator R is structured such that a partition body 22 constituted by a diaphragm is pinched between a regulator main body 20 and a regulator cover 21, a fuel chamber 23 is formed by a concave portion of the regulator main body 20 and a lower side surface of the partition body 22, and a spring chamber 24 is formed sectionally by the regulator cover 21 and an upper side surface of the partition body 22.

Further, a first opening 25 and a second opening 26 are open at a side wall within the fuel chamber 23, and a third opening 27 is open at a center portion of a bottom portion thereof toward a lower side. An upper end of the third opening 27 is open to an inner side of the fuel chamber 23 via a regulator valve seat 28.

Further, the partition body 22 is integrally provided with a valve body 29 opening and closing the regulator valve seat 28 and controlling an opening of the regulator valve seat 28 so as to face to the regulator valve seat 28. The partition body 22 including the valve body 29 is energized toward the fuel chamber 23 side by a regulator spring 30 provided contractedly within the spring chamber 24.

Further, the fuel reserved within the fuel tank T is boosted by a fuel pump P such as a motor-driven pump or the like, a pump suction path Pa of the fuel pump P is connected to the fuel tank T by a pump suction pipe 31, and a pump discharge path Pb of the fuel pump P and a first opening 25 of the pressure regulator R are connected by a pump discharge pipe 32.

Further, a fuel injection valve J in which an injection hole at a leading end is open toward an intake pipe K is installed to a fuel distribution pipe D, and the second opening 26 of the pressure regulator R and the fuel distribution pipe D are connected by a fuel discharge pipe 33.

Further, the third opening 27 of the pressure regulator R and the fuel tank T are connected by a fuel return pipe 34.

In accordance with the conventional fuel injection apparatus provided with the pressure regulator R mentioned above, prior to the engine start, the fuel within the fuel tank T is sucked into the fuel pump P via the pump suction pipe 31 and the pump suction path Pa when the fuel pump P is driven, and the fuel boosted within the fuel pump P is supplied into the fuel chamber 23 of the pressure regulator R via the pump discharge path Pb, the pump discharge pipe 32 and the first opening 25.

Further, the fuel mentioned above fills the fuel chamber 23 so as to push up the valve body 29 including the partition body, and balances with a spring force of the regulator spring 30 at a set predetermined fuel pressure, whereby a fuel pressure supplied to the fuel chamber 23 is maintained at a predetermined fuel pressure, for example, 250 to 300 kpa.

Further, the fuel within the fuel chamber 23 regulated to the predetermined fuel pressure is supplied to the fuel distribution pipe D from the fuel chamber 23 via the second opening 26 and the fuel discharge pipe 33, and the fuel is controlled by the fuel injection valve J so as to be injected and supplied to the intake pipe K.
On the other hand, an excess fuel at a time of pressure regulation by the valve body 29 is returned to the fuel tank T via the regulator valve seat 28, the third opening 27 and the fuel return pipe 34, and is again sucked into the fuel pump P.

EP 1388664A2 discloses a pressure regulator apparatus comprising: a regulator apparatus main body formed in a cup shape, having an opening portion open toward one end, and provided with a regulator accommodating concave portion, in which a first fuel flow path is open at a bottom wall thereof, and a flow path boss insertion hole connected to the first fuel flow path; and a regulator cover closing the opening portion of said regulator accommodating concave portion, wherein a pressure regulator is arranged within a regulator accommodating chamber formed by closing said regulator accommodating concave portion by the regular cover, wherein a fuel inflow path boss, which protrudes toward a lower side from a bottom portion of a regulator main body of the pressure regulator and in which a fuel outflow path connected to a fuel chamber of the pressure regulator is provided, is arranged so as to be inserted airtightly into said flow path boss insertion hole , and a return fuel passage connected to a regular valve seat of the pressure regulator is arranged so as to be open to the regulator accommodating chamber and so as to be connected to the first fuel flow path, and wherein a second fuel flow path, which is connected to the regulator accommodating chamber at the bottom side of the regulator main body, and a pump discharge path of a fuel pump are connected via a third fuel flow path connected to the second fuel flow path and a first fuel connection, the second fuel flow path and a fuel distribution pipe are connected via a fourth fuel flow path connected to the second fuel flow path and a second fuel connection, and the first fuel flow path and a fuel tank are connected by a third fuel connection.

Further pressure regulator apparatuses are disclosed, for example, in WO 02/48543 A1, US 4446837, and DE 10012533A1.

### Disclosure of the Invention

In the case that the conventional pressure regulator mentioned above is employed in a fuel injection apparatus of a motor cycle, there is a case that the positions of the first opening 25, the second opening 26 and the third opening 27 open to an outer side from the regulator main body 20 are largely different in accordance with the engines and the vehicles. This is particularly caused by factors that a mounting space of the parts such as the pressure regulator R and the like is a narrow limited range, and that the layout of the fuel pipe is greatly changed in accordance with the engines and the vehicles.

In accordance with the structure mentioned above, it is necessary to prepare the pressure regulators R in which the opening positions of the first, second and third openings 25, 26 and 27 are different, in correspondence to the engines and the vehicles, and a multi-kind and small-lot production is executed. Accordingly, it is impossible to reduce a manufacturing cost of the pressure regulator R. (In other words, it is impossible to expect improvement of production efficiency in accordance with a mass production.)

Further, in the case of executing a maintenance work of the pressure regulator R, it is necessary to detach the pump discharge pipe 32, the fuel discharge pipe 33 and the fuel return pipe 34 from the first opening 25, the second opening 26 and the third opening 27 respectively connected thereto. Detaching and attaching work of these pipes is extremely troublesome, a lot of attention is necessary for preventing erroneous assembly of the pipes at a time of reassembling, and a maintenance characteristic of the pressure regulator is deteriorated.

Further, in the case that the pressure regulator R is mounted on the motor cycle, the pressure regulator R is arranged so as to be directly exposed to ambient air, and a sufficient consideration is necessary for collision of foreign materials, attachment of sludge or the like.

A pressure regulator apparatus in accordance with the present invention is made by taking the problems mentioned above into consideration, and an object of the present invention is to provide such a pressure regulator apparatus that a change of a piping connection between respective openings of a pressure regulator, and a fuel tank, a fuel pump and a fuel distribution pipe can be extremely easily and inexpensively executed without changing the pressure regulator, and to provide such a pressure regulator apparatus that a maintenance characteristic of the pressure regulator can be improved.

### Summary of the Invention

In order to achieve the object mentioned above, in accordance with a first aspect of the present invention, there is provided a pressure regulator apparatus according to claim 1.

Further, in accordance with a second aspect of the present invention, there is provided a pressure regulator apparatus according to claim 2.

In accordance with the first aspect of the pressure regulator apparatus on the basis of the present invention, the fuel within the fuel tank is sucked into the fuel pump via the pump suction path, and the boosted fuel is supplied to the fuel chamber of the pressure regulator via the pump discharge path, the first fuel piping, the third fuel flow path, the second fuel flow path and the fuel inflow path.

The fuel supplied into t.he fuel chamber presses the partition body to the spring chamber side, and the fuel pressure within the fuel chamber is regulated to a predetermined pressure in a state in which the pressing force applied to the partition body by the fuel and the spring force of the regulator spring are balanced.

When the pressure regulation mentioned above is applied, the valve body integrally formed with the partition body controls so as to open and close the regulator valve seat, and the fuel discharged from the regulator valve seat is returned to the fuel tank via the return fuel passage, the regulator accommodating chamber, the first fuel flow path and the third fuel piping.

Further, in the case that the fuel pressure within the fuel chamber is regulated to the predetermined fuel pressure, the pressure within the fuel inflow path and the second fuel inflow path connected to the fuel chamber is simultaneously held to the predetermined fuel pressure, and the fuel controlled to the predetermined fuel pressure mentioned above is supplied to the fuel distribution pipe via the second fuel flow path, the fourth fuel flow path and the second fuel piping.

In this case, in accordance with the pressure regulator apparatus of the present invention, since all of the third fuel flow path, the fourth fuel flow path and the first fuel flow path are formed in the regulator apparatus main body, in which the third fuel flow path is connected to the fuel pump via the first fuel piping, the fourth fuel flow path is connected to the fuel distribution pipe via the second fuel piping, and the first fuel flow path is connected to the fuel tank via the third fuel piping, it is not necessary to change the pressure regulator at a time of changing the connection opening positions to the fuel pump, the fuel distribution pipe and the fuel tank.

Further, since it is possible to change the opening positions of the first fuel flow path, the third fuel flow path and the fourth fuel flow path in the regulator apparatus main body, only by changing a metal mold of the boss portion corresponding to the flow paths for injection molding the regulator apparatus main body, an increase of a cost for changing the metal mold is extremely small.

On the other hand, it is not necessary to change the pressure regulator, and the pressure regulator can be used in common to all the engines and vehicles.

In accordance with the structure mentioned above, since a remodeling cost of the regulator apparatus main body can be reduced with respect to the change of the opening positions of the first, third and fourth fuel flow paths, and the common pressure regulator can be used, it is possible to provide an inexpensive pressure regulator apparatus with respect to many kinds of engines and vehicles, and it is especially preferable in the motor cycle in which an accommodating space for the parts is limited or narrow. Further, at a time of executing a maintenance work of the pressure regulator, it is possible to detach the regulator cover from the regulator apparatus main body and to detach the pressure regulator to the external via the opening portion. Accordingly, it is not necessary to detach the first fuel piping, the second fuel piping and the third fuel piping one by one, whereby it is possible to omit detaching and attaching work of the pipings, and it is possible to prevent erroneous assembly of the pipings as well as it is possible to largely improve a maintenance workability.

Particularly, since it is extremely hard to detach and attach the piping in the motor cycle, it is possible to obtain an extremely effective advantage in the motor cycle.

Further, since the outer periphery of the pressure regulator is surrounded by the regulator apparatus main body and the regulator cover, neither the foreign materials come into collision with the pressure regulator, nor the dusts are attached thereto. Accordingly, the structure is preferably employed for the motor cycle, in which the pressure regulator is arranged so as to be directly exposed to the external portion.

Further, in accordance with the second aspect of the pressure regulator apparatus of the present invention, the fuel controlled to the predetermined fuel pressure is supplied to the fuel distribution pipe by the second fuel piping branched from the first fuel piping. Accordingly, in addition to the effects of the first aspect mentioned above, the fourth fuel flow path of the regulator apparatus main body is not necessary. Therefore, at a time of changing the opening positions of the fuel flow paths, it is possible to further lower the remodeling cost of the pressure regulator. Further, the structure is preferable in view of making the regulator apparatus main body compact.

### Detailed Description of the Invention

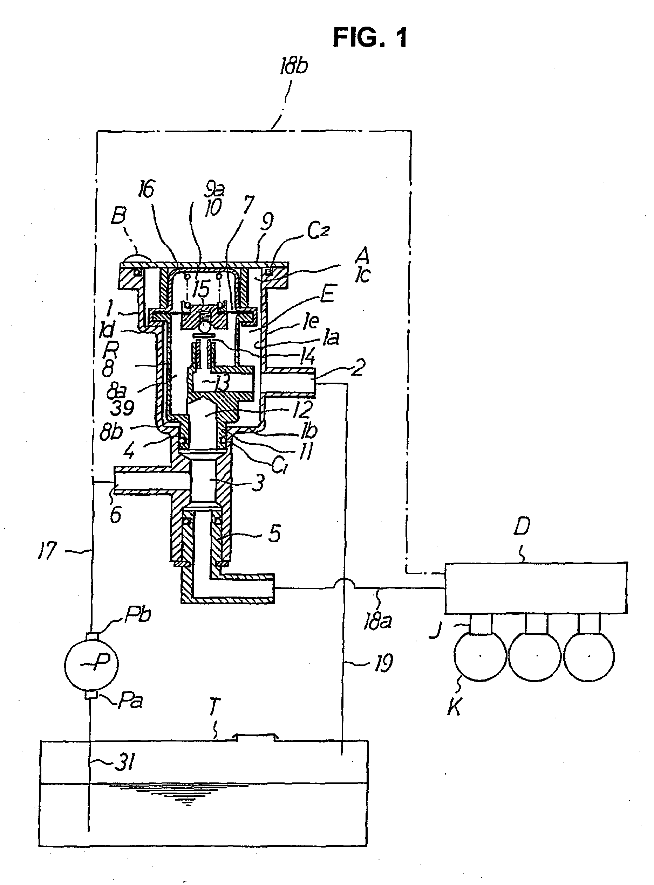

A description will be given below of an embodiment of a pressure regulator apparatus in accordance with the present invention with reference to Fig. 1.

In this case, the same reference numerals are attached to the same structure portions as those of Fig. 2, and a description thereof will be omitted.

Reference numeral 1 denotes a regulator apparatus main body. The regulator apparatus main body 1 is formed as follows.

Reference symbol 1a denotes a bottomed cup-shaped regulator accommodating concave portion, in which an opening portion 1c is open toward one end A at an upper side from a bottom portion 1b. A locking step portion 1d facing to the opening portion 1c is formed near an upper end of the regulator accommodating concave portion 1a, and a first fuel flow path 2 is open at a side wall le.

Further, a flow path boss insertion hole 4 connected to a second fuel flow path 3 is provided so as to be open at the bottom portion 1b, and a fourth fuel flow path 5 is arranged so as to be connected to a lower side of the second fuel flow path 3.

The fourth fuel flow path 5 in the present embodiment is structured such that an L-shaped joint is arranged so as to be inserted to a lower end of the second fuel flow path 3, however, the fourth fuel flow path 5 may be integrally formed with the regulator apparatus main body 1.

In other words, an upper side of the second fuel flow path 3 is open to the bottom portion 1b of the regulator accommodating concave portion 1a via the flow path boss insertion hole 4, and the lower side of the second fuel flow path 3 is connected to the fourth fuel flow path 5.

Further, a third fuel flow path 6 is arranged so as to be open toward a left side from the second fuel flow path 3.

Reference symbol R denotes a pressure regulator, which is structured as follows.

Reference symbol 7 denotes a partition body constituted by a diaphragm. The partition body 7 is pinched between an upper collar portion of a regulator main body 8 and a lower collar portion of a regulator cover 9, a fuel chamber 39 is formed by a lower side surface of the partition body 7 and a concave portion 8a facing thereto, and a spring chamber 10 is formed by an upper side surface of the partition body 7 and a concave portion 9a of the regulator cover 9 facing thereto.

Reference numeral 11 denotes a fuel inflow path boss protruding toward a lower side from a bottom portion 8b of the regulator main body 8. A fuel inflow path 12 is provided toward an inner side of the fuel chamber 39 from a lower end of a fuel inflow path boss 11.

In other words, the fuel inflow path 12 is provided within the fuel inflow path boss 11, a lower side thereof is open at a lower end of the fuel inflow path boss 11, and an upper side thereof is open to an inner side of the fuel chamber 39.

Further, reference numeral 13 denotes a return fuel passage in which one end is open to the inner side of the fuel chamber 39 via a regulator valve seat 14, and the other end is open at a side wall of the regulator main body 8. A valve body 15 integrally attached to the partition body 7 is arranged so as to face to the regular valve seat 14 open to the inner side of the fuel chamber 39.

In this case, reference numeral 16 denotes a regulator spring arranged contractedly within the spring chamber 10, and pressing and energizing the partition body 7 including a valve body 15 toward the regulator valve seat 14.

Further, the pressure regulator R formed as mentioned above is arranged so as to be accommodated within the regulator accommodating concave portion 1a through the opening portion 1c at one end A of the regulator accommodating concave portion 1a. At this time, the fuel inflow path boss 11 is inserted into the flow path boss insertion hole 4 of the regulator apparatus main body 1, and a collar portion Ra is arranged on a locking step portion 1d of the regulator accommodating concave portion 1a.

Further, in the state mentioned above, the regulator cover 9 is arranged over the opening portion 1c at one end A of the regulator apparatus main body 1, and the regulator cover 9 is arranged so as to be screwed to the regulator apparatus main body 1 by a screw B.

In accordance with the structure mentioned above, the pressure regulator R is arranged so as to be accommodated within a regulator accommodating chamber E formed by the regulator accommodating concave portion 1a and the regulator cover 9. At this time, a lower end of the fuel inflow path 12 is connected so as to face to the second fuel inflow path 3 of the regulator apparatus main body 1, and a right end of the return fuel passage 13 is open to an inner side of the regulator accommodating chamber E.

In this case, reference symbol C1 denotes a seal ring such as an O-ring or the like provided contractedly between the fuel inflow path boss 11 and the flow path boss insertion hole 4, and reference symbol C2 denotes a seal ring such as an O-ring or the like provided contractedly between an upper portion at one end A of the regulator apparatus main body 1 and the regulator cover 9.

Further, a pump suction path Pa of the fuel pump P and a fuel tank T are connected by a pump suction pipe 31, a pump discharge path Pb and the third fuel flow path 6 are connected by a first fuel piping 17, the first fuel flow path 2 and the fuel tank T are connected by a third fuel piping 19, and the fourth fuel pipe 5 and a fuel distribution pipe D are connected by a second fuel piping 18a.

In accordance with the pressure regulator apparatus structured mentioned above, when the fuel pump P is driven, the fuel within the fuel tank T is sucked into the fuel pump P via the pump suction pipe 31 and the pump suction path Pa, and the fuel boosted within the fuel pump P is supplied into the fuel chamber 39 of the pressure regulator R via the pump discharge path Pb, the first fuel piping 17, the third fuel flow path 6, the second fuel flow path 3 and the fuel inflow path 12.

As for the fuel within the fuel chamber 39, the partition body 7 including the valve body 15 is actuated in correspondence to power relationship between the fuel pressure within the fuel chamber 39 applied to the partition body 7 and a spring force of the regulator spring 16 applied to the partition body 7, and the fuel pressure within the fuel chamber 39 is regulated to a predetermined pressure. Then, the fuel regulated to the predetermined fuel pressure is supplied to the fuel distribution pipe D via the second fuel flow path 3, the fourth fuel flow path 5 and a second fuel piping 18a, and is injected and supplied into an intake pipe K via a fuel injection valve J.

On the other hand, a return fuel flowing down within the return fuel passage 13 in correspondence to opening and closing of the regulator valve seat 14 by the valve body mentioned above is discharged into the regulator accommodating chamber E, and is next discharged into the fuel tank T via the first fuel flow path 2 and the third fuel piping 19.

In accordance with the pressure regulator apparatus structured as mentioned above, when it is intended to change the opening positions of the third fuel flow path 6 connected to the fuel pump P, the fourth fuel flow path 5 connected to the fuel distribution pipe D, and the first fuel flow path 2 connected to the fuel tank T in correspondence to the engine and the vehicle, it is sufficient to change the flow paths 6, 5 and 2 formed in the regulator apparatus main body 1, and it is possible to achieve the change by simply remodeling a part of an injection metal mold. Accordingly, it is possible to extremely easily and inexpensively change the opening positions.

Alternatively, it is preferable to previously form a plurality of flow path bosses in the regulator apparatus main body 1.

In accordance with the structure mentioned above, no change is necessary about the pressure regulator R, it is possible to use the simple and common pressure regulator R for various engines and vehicles, and it is possible to reduce a manufacturing cost on the basis of a mass production of the pressure regulator R. Accordingly, it is possible to provide an inexpensive pressure regulator apparatus.

Further, when doing maintenance of the pressure regulator R, the regulator cover 9 can be detached from the regulator apparatus main body 1, and the pressure regulator R can be taken out to the external through the opening portion 1c of the regulator accommodating chamber E. At this time, since the fuel pipe is not connected to the pressure regulator R, it is possible to extremely efficiently do a maintenance work.

Further, since the connection state can be maintained without detaching the first fuel piping 17 connected to the third fuel flow path 6, the third fuel piping 19 connected to the first fuel flow path 2, and the second fuel piping 18a connected to the fourth fuel flow path 5, it is unnecessary to execute the detaching work and the attaching work of the pipings at a time of doing the maintenance work. Accordingly, an erroneous assembly between the respective fuel pipings and the respective fuel paths is prevented as well as it is possible to largely improve a working efficiency.

Particularly, since the detaching and attaching work of the fuel pipings are not necessary, it is possible to achieve an extremely great effect in a structure in which an accommodating space is limited narrow such as a motor cycle.

Further, since the pressure regulator R is arranged so as to be accommodated within the regulator accommodating chamber E, and an outer periphery thereof is completely protected by the regulator apparatus main body 1 and the regulator cover 9, neither a foreign material comes into collision with the pressure regulator R, nor a dust is attached to the pressure regulator R, so that it is possible to maintain a stable regulator performance over the long period of time. This structure is particularly preferable in the structure in which respective devices are arranged so as to be directly exposed to the external, such as the motor cycle.

Further, in the case that the second fuel piping 18b is branched from the first fuel piping 17, and the second fuel piping 18b is connected to the fuel distribution pipe D (the second fuel piping 18b is shown by a single-dot chain line in Fig. 1), instead of the fourth fuel flow path 5 and the second fuel piping 18a (the second fuel flow path 3 is connected only to the third fuel flowpath 6 in the structure mentioned above), it is possible to make the structure of the regulator apparatus main body 1 simpler, it is possible to more inexpensively change the opening positions of the fuel flow paths, and it is possible to make the pressure regulator apparatus more compact.

In the case that an L-shaped joint is used as the fourth fuel flow path 5, it is possible to select the opening at any position in a circumferential direction. Accordingly, this structure is preferable.

### Brief Description of the Drawings

Fig. 1 is a vertical sectional view showing an embodiment of a pressure regulator apparatus in accordance with the present invention; and
Fig. 2 is a vertical sectional view showing a conventional pressure regulator.

## Claims

1. A pressure regulator apparatus comprising:
a regulator apparatus main body (1) formed in a cup shape, having an opening portion (1c) open toward one end (A), and provided with a regulator accommodating concave portion (1a), in which a first fuel flow path (2) is open at a side wall (1e) thereof, and a flow path boss insertion hole (4) connected to a second fuel flow path (3) is open at a bottom portion (1b) thereof; and
a regulator cover (9) closing the opening portion (1c) of said regulator accommodating concave portion,
wherein a pressure regulator (R) is arranged within a regulator accommodating chamber (E) which is formed by closing said regulator accommodating concave portion by the regular cover (9) and to which the first fuel flow path (2) is open,
wherein a fuel inflow path boss (11), which protrudes toward a lower side from a bottom portion of a regulator main body (8) of the pressure regulator (R) and in which a fuel inflow path (12) connected to a fuel chamber (9) of the pressure regulator (R) is provided, is arranged so as to be inserted airtightly into said flow path boss insertion hole (4), and a return fuel passage (13) connected to a regular valve seat (14) of the pressure regulator (R) is arranged so as to be open to the regulator accommodating chamber (E), and
wherein said second fuel flow path and a pump discharge path (Pb) of a fuel pump (P) are connected via a third fuel flow path (6) connected to the second fuel flow path (3) and a first fuel piping (17), the second fuel flow path (3) and a fuel distribution pipe (D) are connected via a fourth fuel flow path (5) connected to the second fuel flow path (3) and a second fuel piping (18a), and the first fuel flow path (2) and a fuel tank (T) are connected by a third fuel piping (19).

2. A pressure regulator apparatus comprising:
a regulator apparatus main body (1) formed in a cup shape, having an opening portion (1c) open toward one end (A), and provided with a regulator accommodating concave portion (1a), in which a first fuel flow path (2) is open at a side wall (1e) thereof, and a flow path boss insertion hole (4) connected to a second fuel flow path (3) is open at a bottom portion (1b) thereof; and
a regulator cover (9) closing the opening portion (1c) of said regulator accommodating concave portion,
wherein a pressure regulator (R) is arranged within a regulator accommodating chamber (E) which is formed by closing said regulator accommodating concave portion by the regular cover (9) and to which the first fuel flow path (2) is open,
wherein a fuel inflow path boss (11), which protrudes toward a lower side from a bottom portion of a regulator main body (8) of the pressure regulator (R) and in which a fuel inflow path (12) connected to a fuel chamber (9) of the pressure regulator (R) is provided, is arranged so as to be inserted airtightly into said flow path boss insertion hole (4), and a return fuel passage (13) connected to a regular valve seat (14) of the pressure regulator (R) is arranged so as to be open to the regulator accommodating chamber (E), and
wherein said second fuel flow path and a pump discharge path (Pb) of a fuel pump (P) are connected by a third fuel flow path (6) connected to the second fuel flow path (3) and a first fuel piping (17), a second fuel piping (18b) is branched toward a fuel distribution pipe (D) from the first fuel piping (17), and the first fuel flow path (2) and a fuel tank (T) are connected by a third fuel piping (19).

## Patentansprüche

1. Eine Druckregelungsvorrichtung, aufweisend:
einen becherförmig ausgebildeten Regelungsvorrichtungs-Hauptkörper (1), der einen Öffnungsabschnitt (1c) aufweist, der zu einem Ende (A) hin offen ist, und der mit einem konkaven Regler-Aufnahmeabschnitt (1a) versehen ist, wobei ein erster Kraftstoff-Strömungspfad (2) an einer Seitenwand (1e) davon offen ist und ein Strömungspfad-Vorsprungs-Einsetzloch (4), das mit einem zweiten Kraftstoff-Strömungspfad (3) verbunden ist, an einem unteren Abschnitt (1b) davon offen ist, und
eine Reglerabdeckung (9), die den Öffnungsabschnitt (1c) des konkaven Regler-Aufnahmeabschnitts verschließt,
wobei ein Druckregler (R) innerhalb einer Regler-Aufnahmekamme- (E) angeordnet ist, die durch Schließen des konkaven Regler-Aufnahmeabschnitts durch die Reglerabdeekung (9) gebildet wird und zu der hin der erste Kraftstoff-Strömungspfad (2) offen ist,
wobei ein Kraftstoff-Einströmpfad-Vorsprung (11), der von einem unteren Abschnitt eines Regler-Hauptkörpers (8) des Druckreglers (R) aus in Richtung zu einer unteren Seite hervorsteht und in dem ein Kraftstoff-Einströmpfad (12) vorgesehen ist, der mit einer Kraftstoffkammer (9) des Druckreglers (R) verbunden ist, angeordnet ist, um luftdicht in das Strömungspfad-Varsprungs-Einsatzloch (4) eingesetzt zu sein, und ein Rücklauf-Kraftstoff-Durchgang (13), der mit einem Regelventilsitz (14) des Druckreglers (R) verbunden ist, angeordnet ist, um zu der Regler-Aufnahmekammer (E), hin offen zu sein, und
wobei der zweite Kraftstoff-Strömungspfad und ein Pumpen-Ableitungspfad (Pb) einer Kraftstoffpumpe (P) über einen dritten Kraftstoff-Strömungspfad (6) verbunden sind, der mit dem zweiten Kraftstoffströmungspfad (3) und einer ersten Kraftstoffleitung (17) verbunden ist, der zweite Kraftstoff-Strömungspfad (3) und ein Kraftstoffverteilungsrohr (D) über einen vierten Kraftstoff-Strömungspfad (5) verbunden sind, der mit dem zweiten Kraftstoff-Strömungspfad (3) und einer zweiten Kraftstoffleitung (18a) verbunden ist, und der erste Kraftstoff-Strömungspfad (2) und ein Kraftstofftank (T) über eine dritte Kraftstoffleitung (19) miteinander verbunden sind.

2. Eine Druckregelungsvcrrichtung, aufweisend:
einen becherförmig ausgebildeten Regelungsvorrichtungs-Hauptkörper (1), der einen Öffnungsabschnitt (1c) aufweist, der zu einem Ende (A) hin offen ist, und der mit einem konkaven Regler-Aufnahmeabschnitt (1a) versehen ist, wobei ein erster Kraftstoff-Strömungspfad (2) an einer Seitenwand (1e) davon offen ist und ein strömungspfad-vorsprungs-Einsetzloch (4), das mit einem zweiten Kraftstoff-Strömungspfad (3) verbunden ist, an einem unteren Abschnitt (1b) davon offen ist, und
eine Reglerabdeckung (9), die den Öffnungsabschnitt (1c) des konkaven Regler-Aufnahmeabschnitts verschließt,
wobei ein Druckregler (R) innerhalb einer Regler-Aufnahmekammer (E) angeordnet ist, die durch Schließen des konkaven Regler-Aufnahmeabschnitts durch die Reglerabdeckung (9) gebildet wird und zu der hin der erste Kraftstoff-Strömungspfad (2) offen ist,
wobei ein Kraftstoff-Eirströmpfad-Vorsprung (11), der von einem unteren Abschnitt eines Regler-Hauptkörpers (8) des Druckreglers (R) aus in Richtung zu einer unteren Seite hervorsteht und in dem ein Kraftstoff-Einströmpfad (12) vorgesehen ist, der mit einer Kraftstoffkammer (9) des Druckreglers (R) verbunden ist, angeordnet ist, um luftdicht in das Strömungspfad-Vorsprungs-Einsetzloch (4) eingesetzt zu sein, und ein Rücklauf-Kraftstoff-Durchgang (13), der mit einem Regelventilsitz (14) des Druckreglers (R) verbunden ist, angeordnet ist, um zu der Regler-Aufnahmekammer (E) hin offen zu sein, und
wobei der zweite Kraftscoff-Strömungspfad und ein Puntpen-Rbleitungapafd (Pb) einer Kraftstoffpumpe (P) durch einen dritten Kraftstoff-Strömungspfad (6) miteinander verbunden sind, der mit dem zweiten Kraftstoff-Strömungspfad (3) und einer ersten Kraftstoffleitung (17) verbunden ist, eine zweite Kraftstcffleitung (18b) von der ersten Kraftstoffleitung (17) in Richtung zu einem Kraftstoffverteilungsrohr (D) abgezweigt ist, und der ersten Kraftstoff-Strömungspfad (2) und ein Kraftstofftank (T) durch eine dritte Kraftstoffleitung (19) miteinander verbunden sind.

## Revendications

1. Appareil régulateur de pression comprenant :
un corps principal d'appareil régulateur (1) dont la forme est celle d'une cuvette, qui présente une partie d'ouverture (1c) ouverte vers une extrémité (A), et qui est doté d'une partie concave qui reçoit un régulateur (1a), dans lequel un premier chemin d'écoulement de carburant (2) est ouvert au niveau d'une paroi latérale de celui-ci (le), et un trou d'insertion de bossage de chemin d'écoulement (4) connecté à un deuxième chemin d'écoulement de carburant (3) est ouvert au niveau d'une partie inférieure (1b) de celui-ci ; et
un couvercle de régulateur (9) qui ferme la partie d'ouverture (1c) de ladite partie concave qui reçoit un régulateur ;
dans lequel un régulateur de pression (R) est agencé à l'intérieur d'une chambre qui reçoit un régulateur (E) qui est formée en fermant ladite partie concave qui reçoit un régulateur par le couvercle de régulateur (9) et vers laquelle le premier chemin d'écoulement de carburant (2) est ouvert ;
dans lequel un bossage de chemin d'entrée de carburant (11), qui fait saillie vers un côté inférieur à partir d'une partie inférieure d'un corps principal de régulateur (8) du régulateur de pression (R) et dans lequel un chemin d'entrée de carburant (12) connecté à une chambre de carburant (9) du régulateur de pression (R) est fourni, est agencé de façon à être inséré de manière étanche à l'air dans ledit trou d'insertion de bossage de chemin d'écoulement (4), et un passage de retour de carburant (13) connecté à un siège de soupape de régulateur (14) du régulateur de pression (R) est agencé de façon à être ouvert vers la chambre qui reçoit un régulateur (E) ; et
dans lequel ledit deuxième chemin d'écoulement de carburant et un chemin de refoulement de pompe (Pb) d'une pompe à carburant (P) sont connectés par l'intermédiaire d'un troisième chemin d'écoulement de carburant (6) connecté au deuxième chemin d'écoulement de carburant (3) et à une première tuyauterie de carburant (17), le deuxième chemin d'écoulement de carburant (3) et un tuyau de distribution de carburant (D) sont connectés par l'intermédiaire d'un quatrième chemin d'écoulement de carburant (5) connecté au deuxième chemin d'écoulement de carburant (3) et à une deuxième tuyauterie de carburant (18a), et le premier chemin d'écoulement de carburant (2) et un réservoir de carburant (T) sont connectés par une troisième tuyauterie de carburant (19).

2. Appareil régulateur de pression comprenant :
un corps principal d'appareil régulateur (1) dont la forme est celle d'une cuvette, qui présente une partie d'ouverture (1c) ouverte vers une extrémité (A), et qui est doté d'une partie concave qui reçoit un régulateur (1a), dans lequel un premier chemin d'écoulement de carburant (2) est ouvert au niveau d'une paroi latérale de celui-ci (le), et un trou d'insertion de bossage de chemin d'écoulement (4) connecté à un deuxième chemin d'écoulement de carburant (3) est ouvert au niveau d'une partie inférieure (1b) de celui-ci; et
un couvercle de régulateur (9) qui ferme la partie d'ouverture (1c) de ladite partie concave qui reçoit un régulateur ;
dans lequel un régulateur de pression (R) est agencé à l'intérieur d'une chambre qui reçoit un régulateur (E) qui est formée en fermant ladite partie concave qui reçoit un régulateur par le couvercle de régulateur (9) et vers laquelle le premier chemin d'écoulement de carburant (2) est ouvert ;
dans lequel un bossage de chemin d'entrée de carburant (11); qui fait saillie vers un côté inférieur à partir d'une partie inférieure d'un corps principal de régulateur (8) du régulateur de pression (R) et dans lequel un chemin d'entrée de carburant (12) connecté à une chambre de carburant (9) du régulateur de pression (R) est fourni, est agencé de façon à être inséré de manière étanche à l'air dans ledit trou d'insertion de bossage de chemin d'écoulement (4), et un passage de retour de carburant (13) connecté à un siège de soupape de régulateur (14) du régulateur de pression (R) est agencé de façon à être ouvert vers la chambre qui reçoit un régulateur (E) ; et
dans lequel ledit deuxième chemin d'écoulement de carburant et un chemin de refoulement de pompe (Pb) d'une pompe à carburant (P) sont connectés par un troisième chemin d'écoulement de carburant (6) connecté au deuxième chemin d'écoulement de carburant (3) et à une première tuyauterie de carburant (17), une deuxième tuyauterie de carburant (18b) bifurque vers un tuyau de distribution de carburant (D) à partir de la première tuyauterie de carburant (17), et le premier chemin d'écoulement de carburant (2) et un réservoir de carburant (T) sont connectés par une troisième tuyauterie de carburant (19).
